# EUROPÄISCHE PATENTANMELDUNG

(11) **EP 2 361 917 A1**
(43) Veröffentlichungstag der Anmeldung: **31.08.2011**
(21) Anmeldenummer: 11154212.2
(22) Anmeldetag: 11.02.2011
(51) Int. Cl.: C07F 7/08

(54) **Verfahren zur Herstellung von Silylorganoaminen**

(30) Priorität: 12.02.2010 EP 10153458
(71) Anmelder: Evonik Degussa GmbH, 45128 Essen (DE)
(72) Erfinder: Weber, Christoph, 65183 Wiesbaden (DE); Wolf, Dorit, Dr., 61440 Oberursel (DE)

(57) **Zusammenfassung**

Verfahren zur Herstellung von Silylorganoaminen, wobei das Verfahren die folgenden Schritte umfaßt:
(A) Bereitstellung von Silylorganoaminen der Formel I:

[R²ₐ (R¹O)₃₋ₐ SIR³]ₙ NH₃₋ₙ

in einem Reaktor,
(B) Reaktion der Silylorganoamine der Formel I in Gegenwart von teilchenförmigem metallischem Edelmetall bei einer Temperatur in einem Bereich von 100°C bis 300°C zu Silylorganoaminprodukten der Formel 11:

[R²ₐ (R¹O)₃₋ₐ SiR³]_{y} NH_{3-y},

wobei jeder Rest R¹ und jeder Rest R² unabhängig ausgewählt ist aus einer Gruppe bestehend aus Alkyl-, Aryl-, Aralkyl- und Cycloalkylresten mit weniger als 20 Kohlenstoffatomen, R³ ausgewählt ist aus einer Gruppe bestehend aus zweibindigen Kohlenwasserstoffresten mit weniger als 20 Kohlenstoffatomen und wobei a = 0, 1, 2 oder 3 ist; n =1 oder n = 2 oder n = 1 und 2 ist; und y = 3 ist.

## Beschreibung

Bei der hier vorgestellten Erfindung handelt es sich um ein Herstellungsverfahren für Organosilylgruppen enthaltende tertiäre Amine. Organosilylgruppen enthaltende Amine werden auch als Silylorganoamine bezeichnet.

Organosilylgruppen enthaltende tertiäre Amine sind besonders geeignet als Haftvermittler für Glas und andere Materialien. Diese Amine haben auch eine breite Anwendbarkeit für die Behandlung von Gewebe und für Körperpflegeprodukte.

Ein Verfahren zur Herstellung von Silylorganoaminen offenbart ebenfalls die EP 0 531 948 B1, die ein spezifisches Verfahren zur Herstellung von Organosilylgruppen enthaltenden sekundären und tertiären Aminen durch Kontakt von Silylorganoaminen mit Palladiummonoxid als Katalysator offenbart. Das Verfahren führt zwar zu einer fast quantitativen Umwandlung der Ausgangsstoffe, die gemäß des Verfahrens nach EP 0 531 948 B1 hergestellten Amine müssen jedoch einer weiteren Aufarbeitung, z.B. einer Destillation, unterzogen werden, um die gewünschte Reinheit und Produktkonzentration zu erhalten.

Aufgabe der vorliegenden Erfindung ist es daher, ein weiteres Verfahren zur Herstellung von Organosilylgruppen enthaltenden tertiären Aminen zur Verfügung zu stellen, bei dem die Nachteile des Standes der Technik zumindest verringert sind, das hohe Ausbeuten und hohe Reinheiten in einer einstufigen Synthese ohne weitere destillative Aufarbeitung erzielt.

Diese Aufgabe wird gelöst durch ein Verfahren zur Herstellung von Silylorganoaminen, wobei das Verfahren die folgenden Schritte umfaßt:
(A) Bereitstellung von Silylorganoaminen der Formel I : [R²ₐ (R¹O)₃₋ₐ SiR³]ₙ NH₃₋ₙ in einem Reaktor,
(B) Reaktion der Silylorganoamine der Formel I in Gegenwart von teilchenförmigem metallischem Edelmetall bei einer Temperatur in einem Bereich von 100°C bis 300°C zu
   Silylorganoaminprodukten der Formel II :[R²ₐ (R¹O)₃₋ₐ SiR³]y NH_{3-y},
   wobei jeder Rest R¹ und jeder Rest R² unabhängig ausgewählt ist aus einer Gruppe bestehend aus Alkyl-, Aryl-, Aralkyl und Cycloalkylresten mit weniger als 20 Kohlenstoffatomen, R³ ausgewählt ist aus einer Gruppe bestehend aus zweibindigen Kohlenwasserstoffresten mit weniger als 20 Kohlenstoffatomen und wobei a = 0, 1, 2 oder 3 ist; n =1 oder n = 2 oder n = 1 und 2 (d.h. ein Gemisch von primären und sekundären Silylorganoaminen)ist; und y = 3 ist.

Durch das erfindungsgemäße Verfahren werden nur Organosilylgruppen enthaltende tertiäre Amine erhalten, d.h. dass Index "y" in Formel II gleich 3 ist.

Die Reaktion läuft bevorzugt ohne Einsatz von Lösungsmitteln ab. Die Schwierigkeit mit einem Lösungsmitteleinsatz besteht in der hohen Reaktionstemperatur, bei der nur ein hochsiedendes Lösungsmittel zum Einsatz kommen könnte. Ein solches Lösungsmittel würde allerdings eine aufwendigere Aufarbeitung nötig machen.

Das erfindungsgemäße Verfahren zeichnet sich dadurch aus, dass als Katalysator metallische Edelmetallkatalysatoren und nicht Edelmetalloxide wie beispielsweise in EP 0531 948 B1 eingesetzt werden. Unter einem Edelmetall sind die Elemente der Gruppe 8 bis 10 der 5. und 6. Periode des Periodensystems der Elemente zu verstehen.

Unter Organosilylgruppen der Siliylorganoamine gemäß der vorliegenden Erfindung sind solche Substituenten zu verstehen, die direkte Silizium-Kohlenstoff-Bindungen (Si-C) aufweisen. Solche Substituenten sind in obigen Formeln I und II mit R² bezeichnet. Die von Formel I und II beschriebenen Silylorganoamine können 0 bis 3 Substituenten R2 enthalten.

Unter Organosilylgruppen der Siliylorganoamine gemäß der vorliegenden Erfindung sind aber auch solche Substituenten zu verstehen, in denen der Kohlenstoff über Sauerstoff-Atome an das Silizium geknüpft ist, sog. Organooxysubstituenten. Solche Substituenten sind in obigen Formeln I und II mit R¹ bezeichnet. Die von Formel I und II beschriebenen Silylorganoamine können 0 bis 3 Substituenten R¹ enthalten.

Die Organosilylgruppen können beide Substituenten enthalten, bevorzugt zeichnet sich das erfindungsgemäße Verfahren jedoch dadurch aus, dass die Organosilylgruppen nur solche Substituenten enthalten, in denen der Kohlenstoff über Sauerstoff-Atome an das Silizium geknüpft ist, d.h. dass Index "a" in Formel I und II Formel gleich 0 ist.

Die in Formel I und II beschriebenen Silylorganoamine enthalten den Bestandteil R³, worin R³ ausgewählt ist aus einer Gruppe bestehend aus zweibindigen Kohlenwasserstoffresten mit weniger als 20 Kohlenstoffatomen. R³ kann zum Beispiel ein Alkandiylrest, ein Cycloalkandiylrest, ein Arendiylrest oder ein zweibindiger Rest eines Aralkans sein.

Bevorzugte Amine, die von Formel I beschrieben werden, sind solche, worin R¹ ein Methyl-, Ethyl oder Phenylrest ist; R² ein Methyl- oder Ethylrest ist und R³ ein Alkandiylrest mit 1 bis 3 Kohlenstoffatomen ist. Das in Formel I beschriebene Amin kann zum Beispiel Mono(trimethoxysilylpropyl)amin, Mono(vinyldimethoxysilylpropyl)amin, Mono(3,3,3-trifluorpropyldimethoxysilylpropyl)amin, Mono(methyldimethoxysilylpropyl)amin, Bis(trimethoxysilylpropyl)amin, Bis(methyldimethoxysilylpropyl)amin. Mono(triethoxysilylpropyl)amin, Bis(triethoxysilylpropyl)amin, Mono(phenyldimethoxysilylpropyl)amin, Bisphenyldimethoxysilylpropyl)amin und Mono(trimethoxysilylmethyl)amin oder Mischungen aus diesen Substanzen sein.

Das beschriebene Verfahren kann in irgendeinem Standardreaktor durchgeführt werden, um den Kontakt zwischen Feststoffen und Flüssigkeiten zu bewirken. Der Reaktor kann zum Beispiel ein Festbettreaktor, ein Reaktor mit gerührtem Bett oder ein Wirbelbettreaktor sein.

Bei dem erfindungsgemäßen Verfahren können die Nachteile des Standes der Technik hinsichtlich der erforderlichen destillativen Aufarbeitung umgangen werden. Es werden hohe Reinheitsgrade des Organosilylgruppen enthaltenden tertiären Amines in einer einstufigen Synthese erhalten. Bis auf eine Abfiltration des Katalysators ist eine weitere Aufreinigung unnötig. Eine Destillation oder andere Aufreinigungsverfahren können somit entfallen.

Durch Einsatz des erfindungsgemäßen Verfahrens kann primäres Silylorganoamin in ein tertiäres Silylorganomin überführt werden. Dies ist in folgendem Reaktionsschema unter Punkt I beispielhaft dargestellt.

Auch kann sekundäres Silylorganoamin in ein tertiäres Silylorganomin (s. Reaktion II des folgenden Schemas) oder ein Gemisch von primärem und sekundärem Silylorganoamin in ein tertiäres Silylorganomin (s. Reaktion III des folgenden Schemas) überführt werden.

Die möglichen Reaktionen sind in folgendem Schema beispielhaft für die Herstellung von Tris-(Triethoxysilylypropylamin) dargestellt.

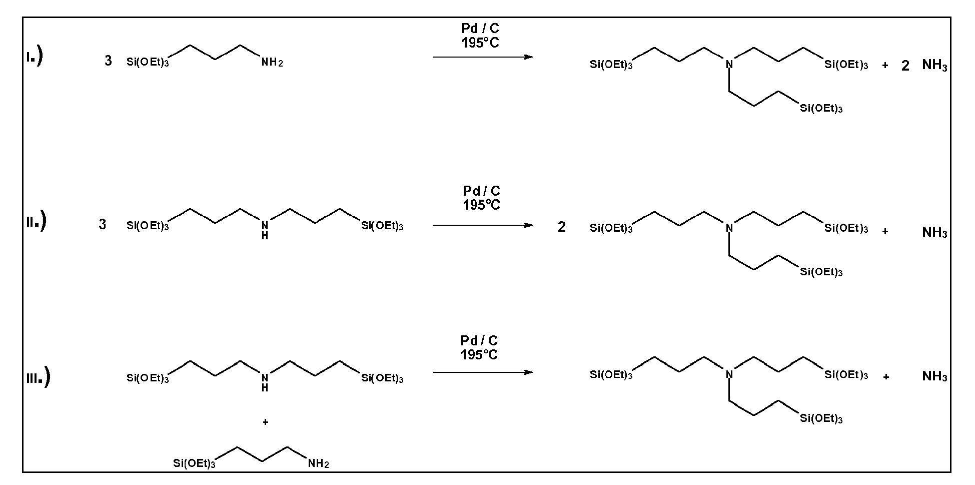

Die Katalysatorkomponente in Form von teilchenförmigem metallischem Edelmetall kann geringe Anteile von Edelmetall in oxidischer oder hydroxidischer Form enthalten. Der Anteil metallischen Edelmetalles an der Katalysatorkomponente sollte nicht unter 20 Gew.-% liegen, bevorzugt beträgt der Anteil metallischen Edelmetalles an der Katalysatorkomponente mindestens 50 Gew.-%, weiter bevorzugt mindestens 75 Gew.-%, besonders bevorzugt mindestens 85 Gew.-%, insbesondere bevorzugt mindestens 95 Gew.-%.

Das teilchenförmige metallische Edelmetall kann zum Beispiel in Form von Flocken, Spänen, Teilchen oder Pulver sein. Bevorzugt ist es, wenn das teilchenförmige metallische Edelmetall in Form von Teilchen oder Pulver mit einem mittleren Teilchendurchmesser von weniger als 100 µm, besonders bevorzugt weniger als 10 µm vorliegt.

Bevorzugt wird für das erfindungsgemäße Verfahren Palladium oder Rhodium als teilchenförmiges metallisches Edelmetall eingesetzt.

Besonders bevorzugt liegt das metallische Edelmetall auf einem Träger vor. Als Träger wird bevorzugt Aktivkohle oder Aluminiumoxid eingesetzt.

Besonders bevorzugt wird als Katalysator Palladium auf Aktivkohle als Träger eingesetzt. Bei der Palladiumkomponente handelt es sich um metallisches Palladium, welches geringe Anteile von Palladium in oxidischer oder hydroxidischer Form enthalten kann. Der Durchmesser der Palladium-Partikel beträgt typischerweise 1 nm - 20 nm, bevorzugt aber 1,5 nm bis 5 nm.

Die Aktivkohle weist typischerweise eine hohe Porosität mit Anteilen von Makroporen, Mesoporen und Mikroporen auf. Typischerweise liegt das Porenvolumen im Bereich von 0,5 - 2,0 ml/g, bevorzugt im Bereich von 1,10-1,20 ml/g, der Anteil von Mikroporen von 0,10 - 0,50 ml/g, bevorzugt 0,30 - 0,40 ml/g und der Mesoporen-Anteil von 0,10 - 1,00 ml/g, bevorzugt 0,40 - 0,50 ml/g. Die spezifische innere Oberfläche (bestimmt nach BET-Methode) liegt typischerweise zwischen 100 m²/g und 2500 m²/g, bevorzugt zwischen 200 m²/g und 2000 m²/g.

Alternativ kann auch ein auf Aktivkohle geträgerter Rhodiumkatalysator eingesetzt werden, wobei der Aktivkohleträger die oben genannten Anforderungen ebenfalls erfüllen muss.

Die Edelmetallkonzentration sollte vorteilhafterweise zwischen 0,1 g und 2,0 g pro mol Amin im Reaktor betragen. Bevorzugt wird eine Edelmetallkonzentration von 0,3 g bis 0,6 g pro mol Amin eingesetzt.

Das erfindungsgemäße Verfahren kann mit Luft durchgeführt werden. Da aber beispielsweise Palladium unter Luft zu Palladiumoxid reagiert und dadurch die katalytische Aktivität vermindert werden kann, sollte, wenn die Reaktion in einer Luftatmosphäre stattfindet, die Reaktion unter geringem Druck bzw. im Vakuum durchgeführt werden. Dabei kann der Druck bis auf 20 mbar abgesenkt werden. Bevorzugt wird zwischen 500 mbar und 900 mbar gearbeitet.

Bevorzugt wird die Reaktion in einer Inertgasatmosphäre durchgeführt. Unter dem Begriff Inertgas sind Stickstoff und sämtliche Edelgase (Helium, Neon, Argon, Krypton, Xenon, Radon) zu verstehen. In einer Inertgasatmosphäre kann die Reaktion unter Atmosphärendruck, d.h. unter Umgebungsdruck stattfinden.

Das Inertgas wird bevorzugt während der Reaktion kontinuierlich dem Reaktor zugeführt. Die Einleitung kann wahlweise auch unter die Flüssigkeitsoberfläche des Reaktionsgemisches beispielsweise mit einer Fritte erfolgen.

Niedriger Inertgasvolumenstrom hat den Vorteil, dass Edukt nur in geringem Maße ausgetragen wird, allerdings gilt dies auch für NH₃, das als Nebenprodukt anfällt. Ein hoher Inertgasvolumenstrom sorgt zwar für einen guten NH₃ Austrag allerdings kann gleichzeitig zu viel Edukt ausgetragen werden. Üblicherweise wird ein Inertgasvolumenstrom von 1ml-100ml Inertgas pro ml Reaktionsansatz und Minute eingestellt.

Eine weitere Steigerung der Produktausbeute wird durch Wasserstoff als Reaktivgas erreicht. Es ist daher bevorzugt, dass während der Reaktion dem Reaktor Wasserstoff zugeführt wird und dadurch eine signifikante Steigerung der Ausbeute an tertiärem Amin gegenüber einer Reaktion in Abwesenheit von Wasserstoff erreicht wird. Besonders bevorzugt wird der Wasserstoff unter der Flüssigkeitsoberfläche des Reaktionsansatzes zugeführt. Die Wasserstoffkonzentration kann dabei zwischen 0,1 und 99,999 vol% liegen. Bevorzugt wird eine Wasserstoffkonzentration von 1 bis 3,8 vol% . Eine Zugabe von Wasserstoff kann zwar auch erfolgen wenn der Reaktionsraum Luft enthält, allerdings nur wenn die Reaktion unterhalb der unteren Explosionsgrenze für Wasserstoff/Sauerstoff Gemische durchgeführt wird. Bevorzugt wird deshalb Wasserstoff als Reaktivgas zugeführt wenn die Reaktion in einer Inertgasatmosphäre abläuft.

Die Reaktion wird bei Atmosphärendruck mit Inertgas oder Wasserstoff oder mit einer Inertgas/Wasserstoffmischung durchgeführt und führt zu keiner Ausfällung von Ammoniaksalzen. Der bei der Reaktion entstehende Ammoniak wird durch das Inertgas oder den Wasserstoff oder das Formiergas entfernt.

Beispiele für Silylorganoaminprodukte, die mit dem vorliegenden Verfahren hergestellt werden können, sind: Tris(vinyldimethoxysilylpropyl)amin, Tris(3,3,3-trifluorpropyldimethoxysilylpropyl)amin, Tris(trimethoxysilylpropyl)amin, Tris-(methyldimethoxysilylpropyl)amin, Tris(triethoxysilylpropyl)amin, Tris(phenyldimethoxysilylpropyl)amin, Tris(trimethoxysilylmethyl)amin.

Das resultierende Produkt des erfindungsgemäßen Verfahrens ist ganz besonders bevorzugt Tris-(triethoxysilylypropyl)amin. Tris-(triethoxysilylpropyl)amin dient als Oberflächenmodifikator oder als Baustein für Polyaminosiloxane (Organosiloxanamin copolymerisate).

Bei dem erfindungsgemäßen Verfahren wird eine nahezu vollständige Umsetzung mit hoher Produktreinheit erreicht, so dass eine weitere Produktaufarbeitung entfallen kann. Es werden Ausbeuten von mindestens 70 %, bevorzugt mindestens 75% oder mindestens 80%, besonders bevorzugt mindestens 85% erzielt.

Die Reaktionszeit ist abhängig von der Reaktionstemperatur, der Edelmetallkatalysatorkonzentration und vom gewünschten Produkt und kann zwischen 30 Minuten und 20 Stunden betragen. Bevorzugt ist eine Reaktionszeit zwischen 6 Stunden und 13 Stunden.

Die Reaktion kann zwischen 100°C und 300°C durchgeführt werden, bevorzugt sind 150°C bis 210°C.

### Beispiele:

Die Erfindung wird anhand der folgenden Beispiele näher erläutert. Die Beispiele dienen der Illustration und sind nicht einschränkend zu verstehen.

### Versuchsbeschreibung CW88 (Palladium / Wasserstoff)

In einem 100 ml Vierhalskolben mit Rückflusskühler wurden 596 mg Pd/C Katalysator (Degussa E 105 R/W 5%) und 21,0 g Bis-(triethoxysilylpropyl)amin vorgelegt.

Der Ansatz wurde zunächst unter Argon (40 ml/min) 15 Minuten bei Raumtemperatur gerührt. Danach wurde eine Mischung aus N2 (95 vol-%) und H2 (5 vol-%) (120 ml/min) zudosiert, weitere 5 Minuten gerührt und auf 195°C Reaktionstemperatur erwärmt.

Nach Erreichen der Temperatur von >185°C wurden durch ein Septum Proben entnommen und gaschromatographisch untersucht.

Der Ansatz wurde nach ca. 6 h abgestellt und am nächsten Tag für eine weitere Reaktionszeit von ca. 6 wieder auf ca. 195°C aufgeheizt.

**Tabelle 1: Edukt- und Produktkonzentration in Abhängigkeit von der Zeit für Versuch CW88**

| Reaktionszeit | Aminosilan | Bis-Aminosilan | Tris-Aminosilan | andere |
|---|---|---|---|---|
| [min] | [%] (GC) | [%] (GC) | [%] (GC) | [%] (GC) |
| 60 | 1,6 | 20,7 | 72,3 | 3,4 |
| 120 | 1,4 | 14,6 | 78,5 | 3,8 |
| 240 | 0,8 | 9,9 | 82,2 | 5,4 |
| 360 | 0,7 | 8,9 | 84,5 | 4,7 |
| 760 | 0,1 | 5,9 | 87,7 | 6,3 |

### Versuchsbeschreibung CW92 (Palladium / Inertgas):

In einem 100 ml Vierhalskolben mit Rückflusskühler wurden 596 mg Pd/C Katalysator (Degussa E 105 R/W 5%) und 21,0 g Bis-(triethoxysilylpropyl)amin vorgelegt. Der Ansatz wurde zunächst unter Argon (40 ml/min) 15 Minuten bei RT gerührt. Danach wurde Stickstoff (120 ml/min) zudosiert und auf ca. 195°C aufgeheizt.

Nach Erreichen der Temperatur von >185°C wurden durch ein Septum Proben entnommen und gaschromatographisch untersucht.

Der Ansatz wurde nach ca. 6 h abgestellt und am nächsten Tag für eine weitere Reaktionszeit von ca. 6 wieder auf ca. 195°C aufgeheizt.

**Tabelle 2: Edukt- und Produktkonzentration in Abhängigkeit von der Zeit für Versuch CW92**

| Reaktionszeit | Aminosilan | Bis-Aminosilan | Tris-Aminosilan | andere |
|---|---|---|---|---|
| [min] | [%] (GC) | [%] (GC) | [%] (GC) | [%] (GC) |
| 60 | 3,2 | 26,6 | 61,8 | 8,5 |
| 120 | 2,5 | 16,3 | 70,9 | 10,3 |
| 240 | 2,8 | 10,8 | 74,8 | 11,6 |
| 360 | 2,1 | 9,1 | 77,2 | 11,6 |
| 760 | 2,4 | 6,0 | 79,8 | 11,8 |

**Tabelle 3: Ergebniszusammenstellung für Tris-(triethoxysilylpropyl)aminherstellung (*Tris) mit geträgertem Pd/C Edelmetallkatalysator**

| Versuch | Katalysator | Edukt | Katalysatorkonz. | Druck | Temperatur | Gasart | Reaktions-dauer | Gehalt_{Tris*} | Gehalt_{Tris*} |
|---|---|---|---|---|---|---|---|---|---|
| | | | g_{Edelmetall}/ mol_{substrat} | [mbar] | [°C] | | [min] | mol [%] (NMR) | [%] (GC) |
| CW88 | Pd/C | Bis-(triethoxysilylpropyl)amin | 0,6 | atm | 195 | H2/N2/Ar | 760 | 91 | 87,7 |
| CW92 | Pd/C | Bis-(triethoxysilylpropyl)amin | 0,6 | atm | 195 | N2/Ar | 760 | 83 | 79,8 |

## Patentansprüche

1. Verfahren zur Herstellung von Silylorganoaminen, wobei das Verfahren die folgenden Schritte umfaßt:
(A) Bereitstellung von Silylorganoaminen der Formel I:
[R²ₐ (R¹O)₃₋ₐ SIR³]ₙ NH₃₋ₙ
in einem Reaktor,
(B) Reaktion der Silylorganoamine der Formel I in Gegenwart von teilchenförmigem metallischem Edelmetall bei einer Temperatur in einem Bereich von 100°C bis 300°C zu Silylorganoaminprodukten der Formel II:
[R²ₐ (R¹O)₃₋ₐ SiR³]_{y} NH_{3-y},
wobei jeder Rest R¹ und jeder Rest R² unabhängig ausgewählt ist aus einer Gruppe bestehend aus Alkyl-, Aryl-, Aralkyl- und Cycloalkylresten mit weniger als 20 Kohlenstoffatomen, R³ ausgewählt ist aus einer Gruppe bestehend aus zweibindigen Kohlenwasserstoffresten mit weniger als 20 Kohlenstoffatomen und wobei a = 0, 1, 2 oder 3 ist; n =1 oder n = 2 oder n = 1 und 2 ist; und y = 3 ist.

2. Verfahren nach Anspruch 1, **dadurch gekennzeichnet, dass** a = 0 ist.

3. Verfahren nach Anspruch 1 oder 2, **dadurch gekennzeichnet, dass** das metallische Edelmetall Palladium oder Rhodium ist.

4. Verfahren nach einem oder mehreren der Ansprüche 1 bis 3, **dadurch gekennzeichnet, dass** das metallische Edelmetall auf einem Träger vorliegt.

5. Verfahren nach einem oder mehreren der Ansprüche 1 bis 4, **dadurch gekennzeichnet, dass** die Reaktion in einer Inertgasatmosphäre durchgeführt wird.

6. Verfahren nach Anspruch 5, **dadurch gekennzeichnet, dass** das Inertgas während der Reaktion kontinuierlich dem Reaktor zugeführt wird.

7. Verfahren nach Anspruch 5 oder 6, **dadurch gekennzeichnet, dass** während der Reaktion dem Reaktor Wasserstoff zugeführt wird.

8. Verfahren nach Anspruch 6 oder 7, **dadurch gekennzeichnet, dass** die Gase unter der Flüssigkeitsoberfläche des Reaktionsansatzes zugeführt werden.
